# EUROPEAN PATENT SPECIFICATION

(11) **EP 2 870 000 B1**
(45) Date of publication and mention of the grant of the patent: **27.02.2019**
(21) Application number: 13773318.4
(22) Date of filing: 04.07.2013
(51) Int. Cl.: B60C 9/20, B60C 19/00

(54) **TYRE FOR MOTORCYCLE WHEELS**
REIFEN FÜR MOTORRADRÄDER
PNEUMATIQUE POUR ROUES DE MOTOCYCLETTE

(30) Priority: 05.07.2012 IT RM20120314; 05.10.2012 US 201261710118 P
(43) Date of publication of application: 13.05.2015
(73) Proprietor: Pirelli Tyre S.p.A., 20126 Milano (IT)
(72) Inventor: GIAMBELLI, Roberta, I-20126 Milano (IT); MARIANI, Mario, I-20126 Milano (IT); GRASSI, Lisa, I-20126 Milano (IT); MIRAGLIOTTA, Luca, I-20126 Milano (IT)
(74) Representative: Porta, Checcacci & Associati S.p.A
(86) International application number: PCT/IB2013/001442
(87) International publication number: WO 2014/006486

(56) References cited:
- JP-A- 2004 168 118
- JP-A- 2008 100 589
- JP-A- 2009 057 008

## Description

### FILED OF THE INVENTION

The present invention relates to tyres for motorcycle wheels.

In particular, the present invention relates to high performance tyres for motorcycle wheels, in other words tyres which are able to reach maximum speeds of at least about 210 km/h or to bear maximum loads of at least about 210 kg or to withstand a combination of both conditions.

### PRIOR ART

A high curvature tyre for motorcycles is known for example from US6609551. Such tyre has a belt structure including circumferentially arranged textile reinforcing cords made of an aromatic polyamide (aramid) fibre.

In EP1710097 a tyre for motorcycles is described having a cross-belt structure comprising aramid reinforcing textile cords.

In US20080271830 a tyre for motorcycles is described having a cross-belt structure comprising aramid cords.

In WO2011012944, to the same Applicant, a tyre for motorcycles is described having a radial carcass comprising cords made of lyocell fibre.

In JP2008 100589 is disclosed a tyre comprising a lyocell cord.

Further prior art documents disclosing tyres for motorcycles similar to those above, are JP2004 168118 and JP2009 057008.

### SUMMARY OF THE INVENTION

In tyres for motorcycles, the materials employed for the reinforcing cords of the belt structures are typically textile or metallic materials.

In tyres for high speed use, such as tyres used in the racing or supersport segments or tyres for road enduro, the reference textile materials for cross-belts and/or circumferential (at 0 degrees) belts consist of aromatic polyamide fibres, commonly called "aramid" fibres. The employed metallic materials are expressed in millimetres and the density of the cords in the belt layer expressed as number of cords per decimeter is within a predetermined range of values;
- making a tyre having said belt structure;
- fitting said tyre on a rim of a motorcycle wheel.

In a second aspect thereof, the present invention relates to a tyre for motorcycles comprising:
a carcass structure;
a belt structure applied in a radially outer position with respect to the carcass structure;
a tread band applied in a radially outer position with respect to the belt structure;
said tyre having a transverse curvature ratio (f/C) of at least about 0.20, wherein said belt structure comprises at least one belt layer comprising a plurality of reinforcing cords arranged substantially parallel to one another and inclined with respect to the equatorial plane of the tyre, said reinforcing cords being made of lyocell yarns or ends, said belt layer having cords arranged so that the product between the diameter of the cords expressed in millimetres and the density of the cords in the belt layer expressed as number of cords per decimeter is between about 40 and about 70.

The Applicant believes that a too high density or a too large diameter of the cords used in the belt layer may make the interposition of the elastomeric portion difficult and may cause a poor stress transmission between the reinforcing elements or, even worse, the detachment of the reinforcing elements.

A too low density and/or a too small diameter of the cords might result in an excessively deformable semifinished product, because of both the deformability of the too much extended elastomeric portions and the rarefied distribution of reinforcing elements. In this case, a uniform stress distribution seems to be hindered and the semifinished product so obtained could turn out to be unfit.

Advantageously, lyocell is a cheap material, which ensures a less critical processing compared to aramid.

The present invention, in one or more preferred aspects of the above-mentioned aspects, may comprise one or more of the features hereinafter presented.

Preferably, the product between the diameter of the cords expressed in millimetres and the density of the cords in the belt layer expressed as number of cords per decimeter is equal to or smaller than about 60.

According to a preferred embodiment, said at least one belt layer comprises cords with a density F equal to or smaller than about 100 cords/dm. Preferably, said at least one belt layer comprises cords with a density F equal to or smaller than about 80 cords/dm.

Preferably, said at least one belt layer comprises cords with a density F equal to or greater than about 60 cords/dm.

Preferably, the cords incorporated in said at least one belt layer have a diameter d smaller than about 1 mm.

Preferably, the cords incorporated in said at least one belt layer have a diameter d smaller than about 0.9 mm.

Preferably, the cords incorporated in said at least one belt layer have a diameter d smaller than about 0.8 mm.

Preferably, the cords incorporated in said at least one belt layer have a diameter d equal to or greater than about 0.5 mm.

Preferably, the cords are formed by at least two yarns or ends twisted together.

Preferably, said cords are formed by a number of yarns or ends twisted together not greater than 4.

Preferably, said cords have a total count greater than about 2000 dtex.

Preferably, said cords have a total count greater than about 3000 dtex.

Preferably, said cords have a total count greater than about 4500 dtex.

Preferably, said cords have a total count smaller than about 8000 dtex.

Preferably, the number of twists given to each yarn or end is greater than about 15 twists/dm.

Preferably, the number of twists given to each yarn or end is smaller than about 40 twists/dm.

Preferably, the number of twists given to the yarns or ends twisted together is greater than about 15 twists/dm.

Preferably, the number of twists given to the yarns or ends twisted together is smaller than about 40 twists/dm.

Preferably, said reinforcing cords have, in a load/elongation diagram, an elastic response of at least 120 N at an elongation of about 2% evaluated according to BISFA tests - Testing methods for viscose, cupro, acetate, triacetate and lyocell filament yarns - 2007 Edition, Determination of tensile properties - Chapter 7 - Tensile test conditions: oven dry test - Table 7.1 - Test procedure - Paragraph 7.5 - With oven dry test on relaxed samples - Subparagraph 7.5.2.4.

Preferably, said reinforcing cords have, in a load/elongation diagram, an elastic response not greater than 200 N at an elongation of about 2% (evaluated according to above-mentioned the BISFA regulations).

Preferably, the cords form with the equatorial plane of the tyre, in each belt layer, an angle, measured at the equatorial plane of the finished tyre, equal to or smaller than about 40°.

Preferably, the cords form with the equatorial plane of the tyre, in each belt layer, an angle, measured at the equatorial plane of the finished tyre, equal to or greater than about 15°.

By lyocell cellulose fibre (or lyocell) it is meant a fibre as described for example in paper: Lyocell, The New Generation of Regenerated Cellulose, in Acta Polytechnica Hungarica, Vol. 5, No. 3, 2008 by Éva Borbély - Professor of Dept. of Packaging and Paper Technology, Budapest Tech - Doberdó út 6, H-1034 Budapest, Hungary.

By diameter of a cord it is meant the measure of the thickness of the cord drawn for example from a reel, preferably treated in advance with tackifiers, obtained by means of a centesimal comparator according to the ASTM D 751-06 regulation on cord segments laid on the plane of the comparator.

By "tyre for motorcycles" it is meant a tyre having a high curvature ratio (typically of at least about 0.20), which allows high camber angles to be reached when the motorcycle runs on a bend.

By "equatorial plane" of the tyre it is meant a plane perpendicular to the rotation axis of the tyre and dividing the tyre into two symmetrically equal portions.

By "circumferential" direction it is meant a direction generically directed according to the rotation direction of the tyre, or in any case only slightly inclined with respect to the rotation direction of the tyre.

By "curvature ratio" of the tyre it is meant the ratio between the distance of the radially highest point of the tread band from the maximum chord of the tyre, and the same maximum chord of the tyre, in a radial section of the tyre. Referring to the angular arrangement of the cords and/or cord coils with respect to the equatorial plane of the tyre, such an angular arrangement is to be intended, in absolute value, for each point of the cord or cord coil, as referring to the angle between the equatorial plane of the tyre and the extension direction of the cord or coil.

Preferably, the tyre is intended to be fitted on the front wheel of a motorcycle. The tyre may have a maximum width of the radial section substantially between about 80 and about 140 mm, preferably between about 90 and about 130 mm.

Preferably, the distance (f) of the radially outermost point of the tread from the line passing through the laterally opposite ends of the tread itself of said front tyre is substantially between about 45 and about 65 mm.

According to another aspect thereof, the present invention relates to a pair of tyres for motorcycles, comprising a front tyre and a rear tyre to be fitted respectively on a front wheel and a rear wheel of a two-wheeled vehicle. Preferably, in such a pair of tyres, the front tyre is made as described above. Preferably, the belt structure of the rear tyre comprises only one belt layer comprising at least on reinforcing element wound on the carcass structure according to adjacent coils oriented according to a substantially circumferential direction.

Preferably, the coils of the at least one reinforcing element are arranged so as to form an angle smaller than 10° in absolute value with respect to the equatorial plane.

Preferably, the reinforcing element of the belt layer of the rear tyre comprises at least one high elongation metal cord.

Alternatively, the reinforcing element of the belt layer of the rear tyre comprises at least one aramid fibre cord.

### BRIEF DESCRIPTION OF THE DRAWINGS

Further features and advantages of the tyre of the present invention will become more apparent from the following detailed description of some preferred embodiments thereof, made hereafter for indicating and non-limiting purposes with reference to the accompanying drawings, wherein:
- figure 1 shows a radial section view of a tyre according to the invention;
- figure 2 shows a portion of the plan development of a portion of the belt structure of a first embodiment of a front tyre according to the present invention;
- figure 3 shows a belt layer in a front section;
- figure 4 shows load/elongation curves for some examples of lyocell cords.

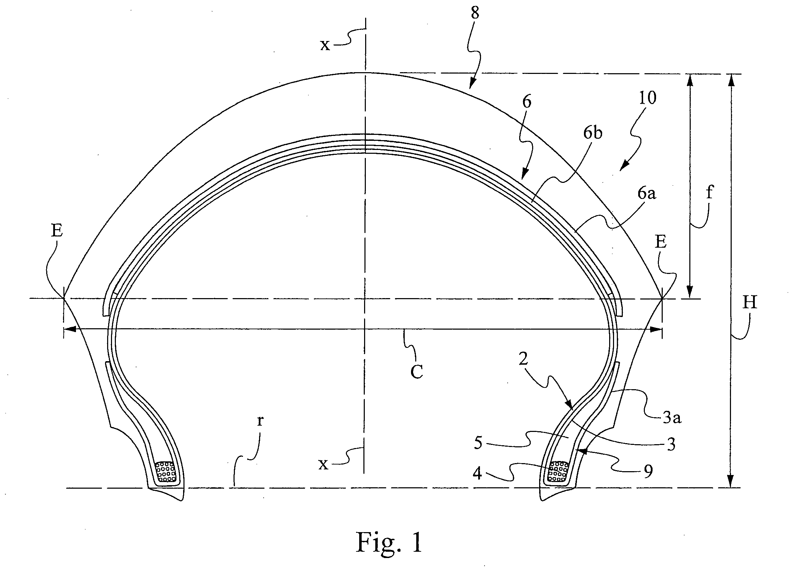

In figure 1, a front tyre of a pair of tyres adapted to fitted on a motorcycle is indicated at 10. The pair of tyres preferably consists of a front tyre 10 having a so-called cross-belt structure, and a rear tyre (not shown) preferably having a belt structure at zero degrees.

In particular, tyre 10 is a high performance tyre which can be intended for fitting on a wheel of a motorcycle for road enduro or "big enduro" having medium-large engine capacity (e.g. 600-1200 cm³ or higher), and/or medium-high power (e.g. about 40 kW or higher). The present invention also refers to tyres intended to be fitted on wheels of "supersport" or "racing" motorcycles, i.e. motorcycles having large engine capacity (e.g. 600 cm³ or higher), and/or high power (e.g. 90-100 kW or higher), also used on tracks.

By high performance tyres for motorcycle wheels are meant tyres which are able to reach maximum speeds of at least about 210 km/h or to bear maximum loads of at least about 210 kg or to withstand a combination of both conditions.

An equatorial plane X-X and a rotation axis (not shown in the figure) are defined in tyre 10. Furthermore, a circumferential direction, arranged according to the rotation direction of the tyre, and an axial direction, perpendicular to the equatorial plane X-X, are defined.

Referring to figure 1, the front tyre 10 comprises a carcass structure 2 formed by at least one carcass layer 3 comprising a plurality of reinforcing elements (cords).

The reinforcing elements, included in the carcass layer 3, preferably comprise textile cords, selected from those usually adopted in the manufacture of carcasses for tyres, for example nylon, rayon, aramid, PET, PEN, lyocell cords, with an elementary thread having a diameter between 0.35 mm and 1.5 mm. The reinforcing elements included in the carcass layer 3 are preferably arranged in radial direction, i.e. according to an angle between 70° and 110°, more preferably between 80° and 100°, with respect to the equatorial plane X-X.

The carcass structure 2 is shaped according a substantially toroidal configuration and engages, by means of its opposite circumferential edges, at least one annular reinforcing structure 9, so as to form a structure usually identified with the name of "bead".

In particular, the opposite lateral edges 3a of the at least one carcass layer 3 are turned up about annular reinforcing structures 9, each comprising one or more annular metal bead rings 4 and a tapered elastomeric filling 5 taking up the space defined between the carcass ply 3 and the respective turned up lateral edge 3a of the at least one carcass layer 3.

The tyre region comprising the bead ring 4 and the filling 5 forms the so-called bead, intended for anchoring the tyre to a respective fitting rim, not shown.

In an alternative embodiment, not shown, the carcass layer has its opposite lateral edges associated, without a turn-up, with special annular reinforcing structures provided with two annular inserts. A filling of elastomeric material may be located in an axially outer position relative to the first annular insert. The second annular insert is instead located in an axially outer position with respect to the end of the carcass layer. Finally, in an axially outer position with respect to said second annular insert, and not necessarily in contact with the same, a further filling can be provided which terminates the formation of the annular reinforcing structure.

A belt structure 6 is circumferentially applied, in a radially outer position, onto the carcass structure. A tread band 8 is circumferentially superimposed on the belt structure 6. Longitudinal and/or transverse grooves, arranged so as to define a desired tread pattern, are typically formed on the tread band 8 further to a moulding operation carried out at the same time with the vulcanization of the tyre.

Preferably, both the reinforcing elements included in the carcass structure 2 and those included in the belt structure 6 comprise lyocell cords.

The front tyre 10 may comprise a pair of sidewalls laterally applied on axially opposite sides to said carcass structure 2.

The front tyre 10 has a cross section characterised by a high transverse curvature.

In particular, the front tyre 10 has a section height H measured, at the equatorial plane, between the top of the tread band and the fitting diameter, identified by reference line r, passing through the tyre beads.

The front tyre 10 further has a width C defined by the distance between the laterally opposite ends E of the tread itself, and a curvature defined by the specific value of the ratio between the distance f of the top of the tread from the line passing through the ends E of the tread itself, measured at the equatorial plane of the tyre, and the aforesaid width C. The ends E of the tread may be formed by a corner.

In the present description and in the subsequent claims, by high curvature tyres are meant tyres having a curvature ratio f/C of at least about 0.2, preferably f/C ≥ about 0.28, for example equal to about 0.40. Preferably, such curvature ratio f/C is not greater than 0.8, more preferably f/C ≤ about 0.5. Preferably, the tyres have particularly low sidewalls. In other words, by tyres with low or lowered sidewalls are meant tyres in which the sidewall height ratio (H-f)/H is smaller than 0.7, more preferably smaller than about 0.65, for example equal to 0.6 for the rear tyre and to 0.5 for the front tyre.

The carcass structure 2 is typically lined on its inner walls with an airtight layer, or so-called "liner" (not shown in figure 1), essentially consisting of a layer of an airtight elastomeric material, adapted to ensure the tight seal of the tyre itself after it has been inflated.

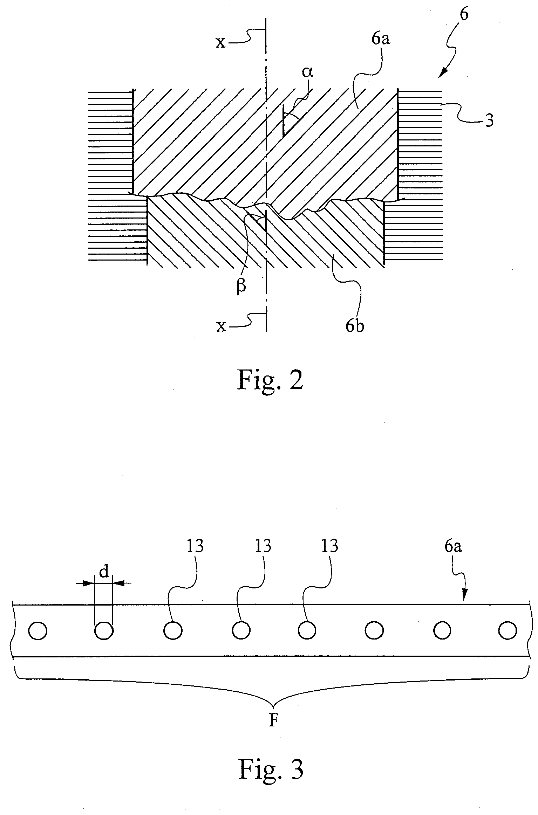

Preferably, as shown in figures 1 and 2, the belt structure 6 consists of at least two radially superimposed layers 6a, 6b.

Referring to figure 2, each layer of the belt structure comprises elastomeric material reinforced with cords 13 made of lyocell and arranged parallel to one another. The layers are arranged so that the cords 13 of the first belt layer 6a have an oblique orientation with respect to the equatorial plane X-X of the tyre, whereas the cords 13 of the second layer also have an oblique orientation, but substantially symmetrically crossed with respect to the cords 13 of the first layer 6a.

The cords 13 of the first layer are arranged so as to form, in the finished tyre, an angle α between the equatorial plane of the tyre and their extension direction, wherein, at the equatorial plane, α ≥ about 15°, preferably α ≤ about 40°.

The cords 13 of the second layer 6b are arranged so as to form an angle β between their extension direction and the equatorial plane of the tyre, wherein said angle has, in proximity of the equatorial plane, a value typically substantially equal to the value of α, but is substantially symmetrical thereto with respect to the equatorial plane.

Preferably, the first layer 6a and the second layer 6b of the belt structure 6 have an axial extension different from each another.

Preferably, the radially outermost belt layer 6a has a greater axial extension than the radially innermost belt layer 6b.

Preferably, the layers 6a, 6b of the belt structure 6 extend substantially at least on part of the crown portion of the tyre.

A first belt layer 6a with a plurality of lyocell cords 13 is shown by way of example in figure 3. Each cord 13 has a diameter (d) equal to or smaller than 1 mm, preferably a diameter (d) equal to or smaller than 0.9 mm, even more preferably smaller than 0.8 mm. Preferably, the cords have a diameter (d) equal to or greater than 0.5 mm.

The belt layers or semifinished products may be made by incorporating a plurality of cords with a substantially parallel arrangement into an elastomeric matrix.

By density F it is indicated the number of cords present per decimeter width in a section of semifinished product substantially perpendicular to the direction of the cords.

The belt layer 6a comprises the cords 13 distributed in such a way that the product between the diameter of the cords 13, expressed in millimetres, and the density F of the cords in the belt layer, expressed as number of cords per decimeter, is comprised between about 40 and about 70, preferably between about 40 and about 60.

The count or linear density of the yarns can be expressed in decitex (dtex), i.e. as the mass expressed in grams of a thread or thread-like reinforcing element having a length of 10000 m.

### For example:

LYO 2440/2 (25x25) identifies a cord formed by two lyocell fibre yarns or ends, each yarn or end having a count of 2440 dtex (total count of the cord equal to 4880 dtex). By "total count" of a cord it is meant the sum of the counts of the individual yarns or ends twisted together to form the cord.

Each end is twisted on itself with 25 twists per decimeter, corresponding to 250 twists per meter (TPM). The two ends are twisted together (preferably in opposite direction) with 25 twists per decimeter to form a cord.

Preferably, each lyocell yarn or end has a count greater than about 900 dtex. Preferably, each lyocell yarn or end has a count smaller than about 2500 dtex. The twists given to the yarns or ends twisted together may be in the same direction or in opposite direction with respect to the twists given to the individual yarns.

The first 6a and second 6b belt layers may include for example cords 13 made of lyocell with the following configurations:
- 1840/3 (30x30) density F = 80 cords/dm - diameter d = 0.73 mm
- 1840/3 (30x30) density F = 70 cords /dm - diameter d = 0.73 mm
- 1840/3 (30x30) density F = 60 cords /dm - diameter d = 0.73 mm
- 2440/2 (25x25) density F = 80 cords /dm - diameter d = 0.66 mm
- 2440/3 (25x25) density F = 80 cords /dm - diameter d = 0.86 mm

Preferably, for manufacturing the cords 13, yarns with different counts may be selected to form, after pairing or coupling, one end which is then twisted alone or with other yarns.

According to this approach, for example, it is possible to make a yarn by pairing or coupling two lyocell yarns of 1220 dtex and 1400 dtex respectively, thus obtaining a yarn or end with a total count equal to 2620 dtex.

Examples of total counts used for making the cords of the cross-belt layer are:
- 2160 dtex in form of lyocell 1220/940 dtex
- 2620 dtex in form of lyocell 1220/1400 dtex
- 2780 dtex in form of lyocell 1840/940 dtex
- 3240 dtex in form of lyocell 1840/1400 dtex
- 3840 dtex in form of lyocell 2440/1400 dtex
- 4280 dtex in form of lyocell 2440/1840 dtex
- 3380 dtex in form of lyocell 1220/1220/940 dtex
- 3840 dtex in form of lyocell 1220/1220/1400 dtex
- 5080 dtex in form of lyocell 1840/1840/1400 dtex
- 5560 dtex in form of lyocell 1840/1840/1880 dtex
- 6280 dtex in form of lyocell 2440/2440/1400 dtex

Preferably, cords manufactured from yarns with different counts, twisted together, have a total count greater than or equal to about 2000 dtex.

More preferably, said cords have a total count greater than about 3000 dtex. Even more preferably, said cords have a total count greater than about 4500 dtex.

Preferably, cords manufactured from yarns with different counts, twisted together, have a total count smaller than or equal to about 8000 dtex.

The Applicant performed traction tests on yarns according to the testing methods defined by BISFA (Bureau International pour la Standardisation des Fibres Artificielles) - Testing methods for viscose, cupro, acetate, triacetate and lyocell filament yarns - 2007 Edition, Determination of tensile properties - Chapter 7.

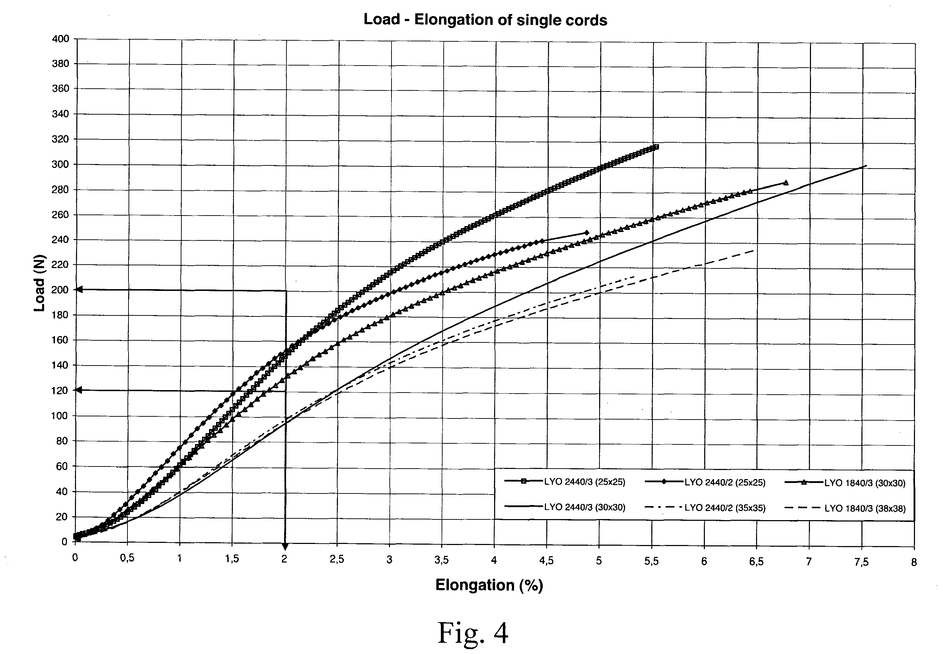

The behaviour of the load (N) - elongation (%) curves of examples of some lyocell cords is shown in figure 4. Among them, some examples of cords which can be used for making belt layers are those indicated in figure 4 as LYO 1840/3(30x30), LYO 2440/2(25x25) and 2440/3(25x25).

Such cords respectively have count (of each individual yarn or end) 1840 dtex, 3 yarns, 30 twists per yarn or end and 30 twists in opposite direction of the yarns or ends twisted together; count (of each individual yarn or end) 2440 dtex, 2 yarns or ends, 25 twists per yarn or end and 25 twists in opposite direction of the yarns or ends twisted together; count (of each individual yarn or end) 2440 dtex, 3 yarns or ends, 25 twists per yarn or end and 25 twists in opposite direction of the yarns or ends twisted together.

In order to improve the belting effect obtainable by a belt layer reinforced with lyocell cords it is advantageous that such cords have an elastic response of at least about 120 N at an elongation of about 2%.

### EXAMPLE

Front tyres for a road enduro motorcycle with size 110/80 R19, speed symbol V (maximum speed 240 km/h), load index 59 (maximum sustainable load 243 kg), including a cross-belt structure, were prepared. In the test tyres the reinforcing cords of the cross-belt structure were made of lyocell with the following structural features: count (of each yarn or end) 2440 dtex, number of yarns or ends 2, number of twists per decimeter respectively for each yarn or end and for the two yarns or ends twisted together 25x25. The cords had a diameter d = 0.66 mm and were incorporated in the belt layer with a density F = 80 cords/dm. The value of the product between the cord diameter and the cord density in the belt layer was equal to 53. The cords of the two belt layers were arranged so as to form, in the finished tyre, angles between the equatorial plane of the tyre and their extension direction at the equatorial plane of about 31° in absolute value.

The tyres so prepared were fitted frontally on a BMW R 1200 GS motorcycle provided with rear tyres without cross-belt and with a belt at zero degrees, and tested on a motor racing circuit. The results obtained are shown in Table 1. For assessing the tyre behaviour, the test driver simulated some characteristic manoeuvres (e.g. acceleration, change of lane, entering a bend, leaving a bend). Afterwards, the test driver assessed the tyre behaviour and gave a score depending on the tyre performance during each manoeuvre. The test driver assessed different behaviours that are particularly significant for the performance of the front tyre, such as, for example, stability in different conditions, driving precision, and handling.

Table 1 summarizes the score sheet of the test driver for tyre controllability. The results of these tests are expressed by means of an assessment scale representing the subjective judgment expressed by the test driver by means of a score system. The assessment scale ranges from a minimum of 1 to a maximum of 5.

**Table 1**

| TEST TYRE | |
|---|---|
| Shimmy (1) with cold tyre | 4,00 |
| Shimmy (1) with warm tyre | 4,00 |
| Stability while accelerating on straight path | 3,25 |
| Auto-induced stability on a straight path | |
| @ 140 km/h | 4,00 |
| @ 160 km/h | 3,80 |
| @ 180 km/h | 3,20 |
| @ 200 km/h | 3,00 |
| Pudding (2) | 3,80 |
| Comfort | 4,00 |
| Handling | 4,00 |

| | |
|---|---|
| (1): anomalous vibration of the handlebars (2): perception of compactness and solidity of the tyre | |

The results reported in Table 1 show that a belt layer including lyocell cords arranged as explained above allows a good driving performance to be achieved, which is highlighted by high values in all of the manoeuvre tests that were performed.

The present invention has been described with reference to some embodiments thereof. Many modifications can be made in the embodiments described in detail, still remaining within the scope of protection of the invention, defined by the following claims.

## Claims

1. Tyre (10) for motorcycles comprising:
a carcass structure (2);
a belt structure (6) applied in a radially outer position with respect to the carcass structure (2);
a tread band (8) applied in a radially outer position with respect to the belt structure (6);
said tyre (10) having a transverse curvature ratio (f/C) of at least 0.20,
wherein said belt structure comprises at least one belt layer comprising a plurality of reinforcing cords (13) arranged substantially parallel to one another and inclined with respect to the equatorial plane of the tyre, said tyre being **characterized in that** said reinforcing cords (13) being made of lyocell yarns or ends, said at least one belt layer having cords arranged parallel to one another so that the product between the diameter (d) of the cords expressed in millimetres and the density (F) of the cords in the belt layer expressed as number of cords per decimeter is between about 40 and about 70.

2. Tyre (10) for motorcycles according to claim 1, wherein the product between the diameter (d) of the cords expressed in millimetres and the density (F) of the cords in the belt layer expressed as number of cords per decimeter is equal to or smaller than about 60.

3. Tyre (10) for motorcycles according to any one of claims 1 or 2, wherein said at least one belt layer comprises cords arranged with a density (F) equal to or smaller than about 100 cords/dm.

4. Tyre (10) for motorcycles according to any one of claims 1 to 3, wherein said at least one belt layer comprises cords arranged with a density (F) equal to or smaller than about 80 cords/dm.

5. Tyre (10) for motorcycles according to any one of claims 1 to 4, wherein said at least one belt layer comprises cords arranged with a density (F) equal to or greater than about 60 cords/dm.

6. Tyre (10) for motorcycles according to any one of claims 1 to 5, wherein said cords (13) incorporated in said at least one belt layer have a diameter (d) smaller than about 1 mm.

7. Tyre (10) for motorcycles according to any one of claims 1 to 6, wherein said cords (13) incorporated in said at least one belt layer have a diameter (d) equal to or smaller than about 0.9 mm.

8. Tyre (10) for motorcycles according to any one of claims 1 to 7, wherein said cords (13) incorporated in said at least one belt layer have a diameter (d) equal to or greater than about 0.5 mm.

9. Tyre (10) for motorcycles according to any one of claims 1 to 8, wherein said cords (13) made of lyocell are formed by at least two yarns or ends twisted together.

10. Tyre (10) according to any one of claims 1 to 9, wherein said cords (13) are formed by a number of yarns or ends twisted together not greater than 4.

11. Tyre (10) for motorcycles according to any one of claims 1 to 10, wherein said cords (13) have a total count greater than about 2000 dtex.

12. Tyre (10) according to any one of claims 1 to 11, wherein said cords (13) have a total count greater than about 3000 dtex.

13. Tyre (10) according to any one of claims 1 to 12, wherein said cords (13) have a total count smaller than about 8000 dtex.

14. Tyre (10) for motorcycles according to any one of claims 1 to 13, wherein the number of twists given to each yarn or end is greater than about 15 twists/dm.

15. Tyre (10) for motorcycles according to any one of claims 1 to 14, wherein the number of twists given to each yarn or end is smaller than about 40 twists/dm.

16. Tyre (10) according to any one of claims 1 to 15, wherein the number of twists given to each yarn or end is equal to the number of twists given to the yarns or ends twisted together.

17. Tyre (10) for motorcycles according to any one of claims 1 to 16, wherein said belt structure (6) comprises at least two radially superimposed belt layers, the cords of both layers being arranged so as to form an angle greater than or equal to about 15° with respect to the equatorial plane of the tyre.

18. Tyre (10) for motorcycles according to any one of claims 1 to 17, wherein the cords of both layers are arranged so as to form an angle smaller than or equal to about 40° with respect to the equatorial plane of the tyre.

19. Tyre (10) for motorcycles according to any one claims 1 to 18, wherein said tyre is intended to be fitted on the front wheel of a motorcycle.

20. Tyre (10) for motorcycles according to any one of claims 1 to 19, wherein said tyre has a radial section width substantially between about 80 and about 140 mm.

## Patentansprüche

1. Reifen (10) für Motorräder, umfassend:
eine Karkassenstruktur (2);
eine Gürtelstruktur (6), die in Bezug auf die Karkassenstruktur (2) in einer radial äußeren Position angelegt ist;
einen Laufflächenring (8), der in Bezug auf die Gürtelstruktur (6) in einer radial äußeren Position angelegt ist;
wobei der Reifen (10) ein Querwölbungsverhältnis (f/C) von zumindest 0,20 aufweist.
wobei die Gürtelstruktur zumindest eine Gürtellage umfassend eine Vielzahl von Verstärkungskorden (13), die im Wesentlichen parallel zueinander angeordnet und in Bezug auf die Äquatorialebene des Reifens geneigt sind, umfasst, wobei der Reifen **dadurch gekennzeichnet ist, dass** die Verstärkungskorde (13) aus Lyocell-Garnen oder -Enden hergestellt sind, wobei die zumindest eine Gürtellage Korde aufweist, die parallel zueinander so angeordnet sind, dass das Produkt aus dem Durchmesser (d) der Korde ausgedrückt in mm und der Dichte (F) der Korde in der Gürtellage ausgedrückt als Anzahl der Korde pro Dezimeter zwischen etwa 40 und etwa 70 ist.

2. Reifen (10) für Motorräder nach Anspruch 1, wobei das Produkt aus dem Durchmesser (d) der Korde ausgedrückt in mm und der Dichte (F) der Korde in der Gürtellage ausgedrückt als Anzahl der Korde pro Dezimeter gleich oder kleiner etwa 60 ist.

3. Reifen (10) für Motorräder nach einem der Ansprüche 1 oder 2, wobei die zumindest eine Gürtellage Korde umfasst, die mit einer Dichte (F) gleich oder kleiner als etwa 100 Korde/dm angeordnet sind.

4. Reifen (10) für Motorräder nach einem der Ansprüche 1 bis 3, wobei die zumindest eine Gürtellage Korde umfasst, die mit einer Dichte (F) gleich oder kleiner als etwa 80 Korde/dm angeordnet sind.

5. Reifen (10) für Motorräder nach einem der Ansprüche 1 bis 4, wobei die zumindest eine Gürtellage Korde umfasst, die mit einer Dichte (F) gleich oder kleiner als etwa 60 Korde/dm angeordnet sind.

6. Reifen (10) für Motorräder nach einem der Ansprüche 1 bis 5, wobei die Korde (13), die in die zumindest eine Gürtellage einbezogen sind, einen Durchmesser (d) kleiner als etwa 1 mm aufweisen.

7. Reifen (10) für Motorräder nach einem der Ansprüche 1 bis 6, wobei die Korde (13), die in die zumindest eine Gürtellage einbezogen sind, einen Durchmesser (d) kleiner als etwa 0,9 mm aufweisen.

8. Reifen (10) für Motorräder nach einem der Ansprüche 1 bis 7, wobei die Korde (13), die in die zumindest eine Gürtellage einbezogen sind, einen Durchmesser (d) kleiner als etwa 0,5 mm aufweisen.

9. Reifen (10) für Motorräder nach einem der Ansprüche 1 oder 8, wobei die aus Lyocell hergestellten Korde (13) aus zumindest zwei miteinander verdrillten Enden gebildet werden.

10. Reifen (10) nach einem der Ansprüche 1 bis 9, wobei die Korde (13) aus einer Anzahl von nicht mehr als 4 miteinander verdrillten Garnen oder Enden gebildet werden.

11. Reifen (10) für Motorräder nach einem der Ansprüche 1 bis 10, wobei die Korde (13) eine Gesamt-Faserzahl von mehr als etwa 2000 dtex aufweisen.

12. Reifen (10) für Motorräder nach einem der Ansprüche 1 bis 11, wobei die Korde (13) eine Gesamt-Faserzahl von mehr als etwa 3000 dtex aufweisen.

13. Reifen (10) für Motorräder nach einem der Ansprüche 1 bis 12, wobei die Korde (13) eine Gesamt-Faserzahl von weniger als etwa 8000 dtex aufweisen.

14. Reifen (10) für Motorräder nach einem der Ansprüche 1 bis 13, wobei die Anzahl der Windungen, die jedem Garn oder Ende verliehen wird, größer als 15 Windungen/dm ist.

15. Reifen (10) für Motorräder nach einem der Ansprüche 1 bis 14, wobei die Anzahl der Windungen, die jedem Garn oder Ende verliehen wird, größer als 40 Windungen/dm ist.

16. Reifen (10) nach einem der Ansprüche 1 bis 15, wobei die Anzahl der Windungen, die jedem Garn oder Ende verliehen wird, gleich der Anzahl der Windungen ist, mit der die miteinander verdrillten Garne oder Enden verdrillt sind.

17. Reifen (10) für Motorräder nach einem der Ansprüche 1 bis 16, wobei die Gürtelstruktur (6) zumindest zwei radial überlagerte Gürtellagen umfasst, wobei die Korde beider Lagen so angeordnet sind, dass sie einen Winkel von größer oder gleich etwa 15° in Bezug auf die Äquatorialebene des Reifens bilden.

18. Reifen (10) für Motorräder nach einem der Ansprüche 1 bis 17, wobei die Korde beider Lagen so angeordnet sind, dass sie einen Winkel von kleiner oder gleich etwa 40° in Bezug auf die Äquatorialebene des Reifens bilden.

19. Reifen (10) für Motorräder nach einem der Ansprüche 1 bis 18, wobei der Reifen zur Montage an dem Vorderrad eines Motorrads vorgesehen ist.

20. Reifen (10) für Motorräder nach einem der Ansprüche 1 bis 19, wobei der Reifen eine radiale Querschnittbreite im Wesentlichen zwischen etwa 80 und etwa 140 mm aufweist.

## Revendications

1. Pneu (10) pour motocycles comprenant :
une structure de carcasse (2) ;
une structure de ceinture (6) appliquée dans une position radialement externe par rapport à la structure de carcasse (2) ;
une bande de roulement (8) appliquée dans une position radialement externe par rapport à la structure de ceinture (6) ;
ledit pneu (10) ayant un rapport de courbure transversale (f/C) d'au moins 0,20,
dans lequel ladite structure de ceinture comprend au moins une couche de ceinture comprenant une pluralité de câblés de renfort (13) agencés de manière essentiellement parallèle les uns aux autres et inclinés par rapport au plan équatorial du pneu, ledit pneu étant **caractérisé en ce que** lesdits câblés de renfort (13) sont constitués de fils ou d'extrémités lyocell, ladite au moins une couche de ceinture ayant des câblés agencés parallèlement les uns aux autres de sorte que le produit entre le diamètre (d) des câblés exprimé en millimètres et la densité (F) des câblés dans la couche de ceinture exprimée en nombre de câblés par décimètre soit compris entre environ 40 et environ 70.

2. Pneu (10) pour motocycles selon la revendication 1, dans lequel le produit entre le diamètre (d) des câblés exprimé en millimètres et la densité (F) des câblés dans la couche de ceinture exprimée en nombre de câblés par décimètre est inférieur ou égal à environ 60.

3. Pneu (10) pour motocycles selon l'une quelconque des revendications 1 ou 2, dans lequel ladite au moins une couche de ceinture comprend des câblés agencés avec une densité (F) inférieure ou égale à environ 100 câblés/dm.

4. Pneu (10) pour motocycles selon l'une quelconque des revendications 1 à 3, dans lequel ladite au moins une couche de ceinture comprend des câblés agencés avec une densité (F) inférieure ou égale à environ 80 câblés/dm.

5. Pneu (10) pour motocycles selon l'une quelconque des revendications 1 à 4, dans lequel ladite au moins une couche de ceinture comprend des câblés agencés avec une densité (F) supérieure ou égale à environ 60 câblés/dm.

6. Pneu (10) pour motocycles selon l'une quelconque des revendications 1 à 5, dans lequel lesdits câblés (13) incorporés dans ladite au moins une couche de ceinture ont un diamètre (d) inférieur à environ 1 mm.

7. Pneu (10) pour motocycles selon l'une quelconque des revendications 1 à 6, dans lequel lesdits câblés (13) incorporés dans ladite au moins une couche de ceinture ont un diamètre (d) inférieur ou égal à environ 0,9 mm.

8. Pneu (10) pour motocycles selon l'une quelconque des revendications 1 à 7, dans lequel lesdits câblés (13) incorporés dans ladite au moins une couche de ceinture ont un diamètre (d) supérieur ou égal à environ 0,5 mm.

9. Pneu (10) pour motocycles selon l'une quelconque des revendications 1 à 8, dans lequel lesdits câblés (13) constitués de lyocell sont formés par au moins deux fils ou extrémités torsadé(e)s ensemble.

10. Pneu (10) selon l'une quelconque des revendications 1 à 9, dans lequel lesdits câblés (13) sont formés par un certain nombre de fils ou d'extrémités torsadé(e)s ensemble inférieur ou égal 4.

11. Pneu (10) pour motocycles selon l'une quelconque des revendications 1 à 10, dans lequel lesdits câblés (13) ont un compte total supérieur à environ 2000 dtex.

12. Pneu (10) selon l'une quelconque des revendications 1 à 11, dans lequel lesdits câblés (13) ont un compte total supérieur à environ 3000 dtex.

13. Pneu (10) selon l'une quelconque des revendications 1 à 12, dans lequel lesdits câblés (13) ont un compte total inférieur à environ 8000 dtex.

14. Pneu (10) pour motocycles selon l'une quelconque des revendications 1 à 13, dans lequel le nombre de torsions donné à chaque fil ou extrémité est supérieur à environ 15 torsions/dm.

15. Pneu (10) pour motocycles selon l'une quelconque des revendications 1 à 14, dans lequel le nombre de torsions donné à chaque fil ou extrémité est inférieur à environ 40 torsions/dm.

16. Pneu (10) selon l'une quelconque des revendications 1 à 15, dans lequel le nombre de torsions donné à chaque fil ou extrémité est égal au nombre de torsions donné aux fils ou aux extrémités torsadé(e)s ensemble.

17. Pneu (10) pour motocycles selon l'une quelconque des revendications 1 à 16, dans lequel ladite structure de ceinture (6) comprend au moins deux couches de ceinture superposées radialement, les câblés de deux couches étant agencés de manière à former un angle supérieur ou égal à environ 15° par rapport au plan équatorial du pneu.

18. Pneu (10) pour motocycles selon l'une quelconque des revendications 1 à 17, dans lequel les câblés de deux couches sont agencés de manière à former un angle inférieur ou égal à environ 40° par rapport au plan équatorial du pneu.

19. Pneu (10) pour motocycles selon l'une quelconque des revendications 1 à 18, dans lequel ledit pneu est destiné à être monté sur la roue avant d'un motocycle.

20. Pneu (10) pour motocycles selon l'une quelconque des revendications 1 à 19, dans lequel ledit pneu a une largeur de section radiale essentiellement comprise entre environ 80 et environ 140 mm.
